# EUROPEAN PATENT APPLICATION

(11) **EP 3 073 741 A1**
(43) Date of publication of application: **28.09.2016**
(21) Application number: 15161484.9
(22) Date of filing: 27.03.2015
(51) Int. Cl.: H04N 21/218, H04N 21/2187, H04N 21/235, H04N 21/236

(54) **METHOD FOR INTEGRATING AND DYNAMICALLY MODIFYING A GRAPHIC CREATION TO BE USED IN REAL TIME IN BROADCASTING WORKFLOWS**

(71) Applicant: EVS Broadcast Equipment, 4102 Seraing (BE)
(72) Inventor: Skrypniak, Matthieu, 4053 EMBOURG (BE); Godbille, Arnaud, 4000 LIEGE (BE)
(74) Representative: Pronovem

(57) **Abstract**

The present invention relates to a workflow method in broadcasting applications of an event for delivering a video scene including data dynamically incrusted in the video and displayed graphically, using a production server platform (4) comprising at least a video server (24) and a real-time render engine (14), wherein said workflow method comprises the steps of:
- providing a data feed (11) from a data provider (1) ;
- providing graphic templates (12) of a graphics chart using a graphics design tool (2) ;
- recording video material (13) using multi-cameras (3) at a given recording speed ;
- ingesting synchronously into the server platform (4) said video material (13), said data feed (11) and said graphic templates (12) using ingestion means (5) ;
- binding graphics items to the ingested data feed (11), said graphics items being obtained by dynamically adding or modifying the graphic templates (12) provided by the graphics design tool (2) ;
- selecting an aggregate set of a video sequence from the video material (13) and said graphics items associated with data, using a selection interface (6),
- merging said selected video sequence and graphics items aggregate set into a composite video/graphics scene including data display, using the real-time render engine (14), so that data are displayed in a graphic lining and are time varying along with the video scene in progress and
- playing out the latter towards an end user (7).

## Description

### Field of the Invention

The present invention is related to the field of broadcasting workflows of video content with embedded graphics and data and more generally with embedded media and data, and especially to the creation and modification of overlay graphics with incrusted data in live applications such as live slow motion/replay applications.

### Background of the invention

It is known that in modern broadcasting video media are processed prior to broadcast, especially in live applications such as sport or news. It goes from branding the video content by overlaying the video signal with the broadcaster's logo to much more complicated applications incorporating additional information into the video moving images under the form of static or animated embedded elements (graphics, newscrawls, etc.). For example, in team sport programs, such as football/soccer, rugby, baseball, etc., captions are often added with the home/visitors team flags, the picture or name of a player, the score of the game, the elapsed game time, etc., while, in a newscast, captions are usually used to identify the reporter or the interviewed person.

By way of example in prior art, document US 2003/0011713 discloses a method and system for broadcasting activity occurring in a baseball game, wherein the activity includes one or more base runners occupying bases in a field where the baseball game is being played. The method comprises the steps of (i) providing a video image of activity occurring in the baseball game; (ii) creating a graphic overlay for the video image, wherein the graphic overlay provides indicia representing identity information of the one or more base runners occupying bases; and (iii) overlying the graphic overlay over the video image to create a combined image comprising the graphic overlay and the video image. The indicia representing identity information of the one or more base runners occupying bases is provided in the form of uniform numbers of the base runners. The system includes a video image source for generating a video image signal, a graphic overlay generator for generating a video graphic signal, and a signal mixer for mixing the video image signal and the video graphic signal to output a mixed video signal capable of being broadcast to a viewing screen.

The technological background may be further illustrated here on the basis of the flagship commercial products offered nowadays by manufacturers, such as those in the multi-camera live (super-) slow motion field, providing live editing solutions with full attractiveness mainly in sport or in any other live event broadcasting. Multi-camera live slow motion solutions are scalable and adaptable and can integrate into any live production configuration or workflow. Controlling the production server, these solutions offer different replay mode functions as well as "on the fly" editing actions, appreciated by the broadcasters, for example by using advanced time line editing.

It is also to be noted that some information embedded in the video sequence, especially statistics, sensor output such as time (game, racing car lap), speed (racing car, ball), acceleration (car, ball), wheel pressure (car), etc., logs, etc., which can be generically called "data", may be delivered by external data providers.

More specifically, often in association with the use of instant replay servers, superimposing all kinds of 2D and 3D graphics over the live coverage of the sporting event is increasingly being used for visualizing the dynamics of the game : reviewing a referee decision (e.g. by showing virtual offside line in football), measuring performance (e.g. by indication of service ball speed in tennis), assisting viewers to focus on a key action (e.g. by visualizing a foul committed by a player on another one), etc. Such tools allow the operators to control graphic animations, such as insertion of graphic overlays in real time or in instant replays, which are able to fully bring illustration and value to commentator performance. These effects can be instantly added using the control tool of the live slow motion remote controller and are immediately available.

Presently, a video graphics workflow in broadcasting applications of an event typically comprises the three successive steps of:
- designing a graphics chart ;
- integrating the graphics chart into live graphics production tools and
- providing the composite video/graphics in real time (on air, on cable, etc.) during the event (sport, news, entertainment, etc.).

A graphics chart is defined as a set of graphic objects defined each by a number of characteristics or metadata such as size(s), shape, colour(s), textures, typographies, etc.

The step of designing the graphics chart is usually performed prior to the event recording by a design agency or an artistic department, often using a popular digital image graphics editor such as Adobe Photoshop, Illustrator, CorelDraw, etc. The delivery constraint is to properly export image video samples and templates without being sure it will be integrated correctly, i.e. without losses or mistakes. Each time changes in the graphic files are desired the art department has to send an update over the network and the update has to replace the existing file for integration within the live graphics production tools.

The step of integrating the graphics chart is usually performed by a service company. The workflow consists in using a professional broadcast design solution that will transform the template delivered by the design agency (see above) onto particular graphic items that can be usable in live by a video render engine also called "character generator". The rendering tool permits to fully describe the scene (colours, textures, typographies, etc.) that the broadcaster intends to deliver during the live event.

This step has the constraint to make sure that the integration meets the expectations. However, while the cost of the character generator for integration may be low, the graphic design solution may be, on the contrary, very expensive, and both are mandatory.

The step of providing the graphics in real time by broadcasting during an event is performed by facility and service companies, cable and satellite broadcasters, etc. using the above-mentioned professional real-time graphic solutions. The delivery constraint is to properly handle the graphics chart modifications performed upstream.

The three steps above, while not being integrated (thus standalone), are not always suitable for real-time video broadcasting or rendering, which is constrained to use graphics charts created once by the design agency without any simple opportunity to get modifications in real time on request of the broadcaster. There lacks real time authoring interface. Moreover, due to the three distinct steps mentioned above, losses or mistakes in the graphics chart may be encountered through the different steps.

Very recently some manufacturers of design tools/render engines for broadcasting have proposed features in their design tools which are able to modify metadata of graphic objects or templates externally designed with an art department tool such as Photoshop, these modifications being possibly made during broadcasting, that is dynamically. However in this case the workflow always incorporates the following steps : external design agency - broadcaster design tool - render engine and mixing with video before playing out.

### Aims of the Invention

The present invention aims at synchronously recording and integrating multi-camera feeds in parallel with data flows and graphic templates and at selecting afterwards a video sequence combined with the associated data dynamically displayed graphically using any of the graphics template.

The present invention also aims at providing a solution which permits full integration between graphics creation or modification and real-time playout during the related live event.

Furthermore the invention intends to drastically reduce the time needed between the modification of a graphic asset and its incorporation in the real-time composite graphics/video delivery, thus allowing dynamic modifications in the real-time program broadcasting production and ensuring a perfect match between the design and what is played out.

### Summary of the Invention

A first aspect of the present invention relates to a workflow method in broadcasting applications of an event for delivering a video scene including data dynamically incrusted in the video and displayed graphically, using a production server platform comprising at least a video server and a real-time render engine, wherein said workflow method comprises the steps of:
- providing a data feed from a data provider;
- providing graphic templates of a graphics chart using a graphics design tool ;
- recording video material using at least one camera at a given recording speed ;
- ingesting synchronously into the server platform said video material, said data feed and said graphic templates using ingestion means ;
- binding graphics items to the ingested data feed, said graphics items being obtained by dynamically adding or modifying the graphic templates provided by the graphics design tool ;
- selecting an aggregate set of a video sequence from the video material and said graphics items associated with data, using a selection interface, said graphics items being obtained by dynamically adding or modifying the templates obtained from the graphic design tool ;
- merging said selected video sequence and graphics items aggregate set into a composite video/graphics scene including data display, using the real-time render engine, so that data are displayed in a graphic lining and are time varying along with the video scene in progress and
- playing out the latter towards an end user.

According to preferred embodiments, the video graphics workflow process additionally encompasses at least one of the following characteristics or a suitable combination of these :
- in the ingesting step :
   the provided data feed is time stamped for being synchronized with the video material;
   graphics metadata and text items are dynamically extracted from the graphics design tool and ingested for allowing creating the graphics items ;
- in the selecting step :
   a video sequence is extracted from the video material ingested in a time range ;
   data are extracted from the data feed ingested in the same time range ;
- the step of binding the graphics items to the ingested data feed is performed prior to or during the event recording or on user's choice during the selection step ;
- the step of binding the graphics items to the ingested data feed and/or the step of selecting an aggregate set of a video sequence from the video material and said graphics items associated with data are performed remotely through a cloud platform ;
- the playing out of said selected and merged video sequence and graphics items associated with data are performed at a speed different from the recording speed ;
- the playing out of said selected and merged video sequence and graphics items associated with data are performed in a slow motion replay mode ;
- the playing out of said selected and merged video sequence and graphics items associated with data are performed in live playout ;
- the data provider is selected from the group consisting of a statistics provider, a data logger and at least one data sensor;
- an addition or a modification of a graphics item is performed directly in the graphics design tool so that the graphics chart is dynamically updated within the video scene before or during the playout thereof in real time.
- the graphics chart is an image asset file containing one or more layers and/or text items ;
- said one or more layers and/or text items are selected from the group consisting of sized shape, texture, colour/contrast, fill and typography layers ;
- the production server platform is interfaced with the graphics design tool, the latter being provided with a dynamic image generation plugin ;
- image asset files are dynamically generated or modified, using the image generation plugin, from the content of said one or more layers and/or texts, after that at least one layer and/or text item has been created or modified.

A second aspect of the present invention relates to a video server system for creating a workflow in broadcasting applications of an event for delivering a video scene including data dynamically incrusted in the video and displayed graphically, comprising :
- a data provider for providing a data feed ;
- at least a camera for recording video material;
- a graphics design tool provided with a dynamic image generation plugin for providing graphic templates of a graphics chart and for dynamically adding or modifying said graphics templates into graphics items ;
- a production server platform including a video playout and control render engine, interfaced with said data provider, said at least a camera and said graphics design tool provided with a dynamic image generation plugin for providing graphic templates of a graphics chart respectively ;
- means for synchronously ingesting recorded video material, data feed and graphic templates into the production server platform ;
- a communication platform for the communication of the production server platform including the video playout and control render engine with said graphics design tool provided with a dynamic image generation plugin respectively ;
- a binding interface for binding graphics items to the ingested data feed, said graphics items being obtained by dynamically adding or modifying the graphic templates provided by the graphics design tool;
- a selection interface for selecting an aggregate set of video scene and said graphics items associated with data ;
so that the production server platform is able to communicate with the dynamic image generation plugin via function calls, while said dynamic image generation plugin is able to retrieve file description and content of a graphics item from the graphics design tool interfaced with the production server platform, under the form of structured information script and open image format;
so that the production server platform is able to create a set of image media associated graphically with data and to convert said set of image media to a scene using web mark-up language description and scene content and ;
so that the video playout and control render engine is able to operate playout and live update of the scenes in real time or in quasi real time during the event.

### Brief Description of the Drawings

FIG. 1 schematically represents the global real-time broadcasting workflow for integrating and dynamically modifying graphics incrusted with data feed, according to the present invention.
FIG. 2 schematically shows the two steps of the method according to the present invention, from graphics design to video rendering.
FIG. 3 schematically shows an example embodiment of the architecture of the system used to carry out the method of the invention.
FIG. 4 to 6 show realistic results in case of present invention application in live sport field.

### Description of Preferred Embodiments of the Invention

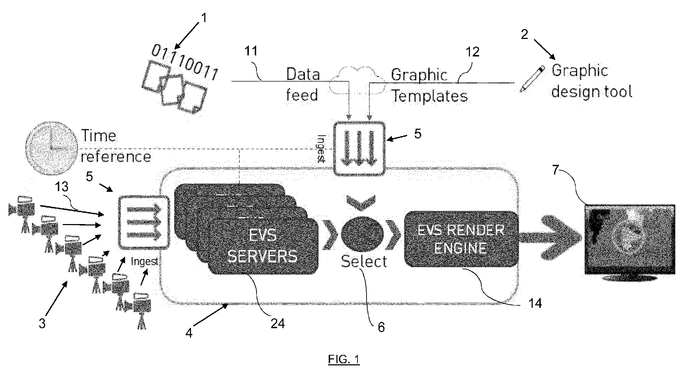

The overview of the method according to the present invention is depicted in FIG. 1. More particularly, the innovation comprises a production server platform allowing:
- a synchronous ingest of audio/video material 13, data feeds 11 and graphic templates 12 ;
- a single-user interface 4 for picking up an aggregate set of data, video and graphics items ;
- a real-time render engine 14 for mixing the graphics items and the video material.

This process is intended to drastically bring up the editorial value offered to the TV customer thanks to a combination of selected most relevant images of a video scene enhanced with live graphics.

This process can be used particularly advantageously for instant replays or highlighted post-production sequences.

According to a preferred embodiment, in a video ingest substep, video feeds 13 are recorded in live and synchronously by one or more video servers 24.

In a data ingest substep, successively:
- data providers 1 (statistics, sensors, logs, etc.) create a data feed 11 to be ingested by said one or more video servers 24.
- data 11 are time stamped to be synchronized with the video feeds 13.

In a graphics ingest substep, successively :
- graphic templates 12 are created using a graphics design tool 2;
- graphic layers (images components, etc.) and texts strings and more generally "metadata" are dynamically extracted from the graphics design tool 2 (see below). By "dynamic extraction", it has to be understood that the final image file can be constantly updated from a modification of the graphic assets with the design tool ;
- graphic media or items assembled from the extracted metadata are dynamically bound to the ingested data feed 11 ;
- said binding can be an automatic process defined prior to the event recording or on user's choice during a selection step (see below).

After performance of the different ingest substeps, a selection step is performed consisting in:
- an extraction of a video sequence taken from the video content that has been ingested in a time range ;
- an extraction of data (associated with a graphic lining) taken from the data content that has been ingested in the same time range.

The selection of the aggregate video/data/graphics will then be played out by the render engine, wherein data will be graphically represented and will evolve dynamically and synchronously with the selected video sequence in progress, whatever speed at which the video is played out (possibly including "(super) slow motion" speeds).

The above-mentioned process also allows to create an automatically highlighted workflow with:
- automated creation of clipping and playlists based on data (for example associated with every goal scored, etc.),
- automated mixing of graphics with the created playlist.

According to a preferred embodiment of the invention, the above-mentioned integration step of a graphics chart designed by an art department may be largely bypassed, leaving only the steps of graphic design and the step of video rendering in real time during the event. Moreover these two steps are fully integrated. For performing the latter, a new professional graphic solution has been set up.

In the sole purpose of illustrating this embodiment, a graphics tool with a feature or plugin dynamically giving access to the image assets (graphic layers, text strings, metadata) may be used to implement the present invention. This plugin will give the possibility to automatically generate image files (and more generally media) from a set of layers or groups of layers. Even when one layer is changed, such a plugin will change the whole image, thus offering potential huge gain of time, which is of course of primary importance in the real-time applications targeted by the present invention. In the frame of the present invention, modification and update steps should be sufficiently fast so as to allow live update in broadcasting applications.

However it will pertain to the understanding of the person skilled in the art that the scope of the present invention, expressed in the claims, is not bound to the use of a specific graphics tool but is however intimately linked to any equivalent dynamic design pluggin or feature or functional unity.

As far as the integration of video and graphics is concerned, the method according to the present invention comprises the steps of:
- retrieving important information contained in the graphic file, such as scene size, text fields (fonts, position, size, alignment, etc.), image layers (position, size, transparency, etc.) ;
- building a package and selecting the specific graphic that the operator wants and edit the specific text he needs.

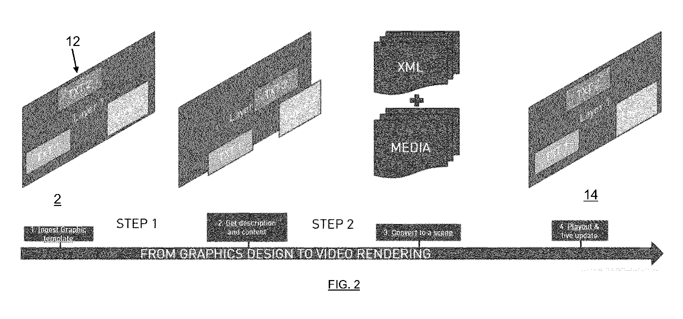

FIG. 2 shows in more details, in an example embodiment of the present invention, the different operations which are performed along the timeline of the workflow, from graphic design to live video rendering. In step 1, the created graphic file is ingested (operation 1) by the system and its description (metadata) and content (media, images) are retrieved (operation 2). Graphic media or items are typically made of layers such as text fields (TXT1, TXT2, etc.) with metadata (position, typography, etc.), texture layers (LAYER1, LAYER2) with metadata, etc. In step 2, these images or media are converted into a scene, which is a combination of scene content with web mark-up language description, e.g. XML (operation 3). It is possible to visualize the outcome in situ on the video machine before video playout in real time (on a control video screen). Finally, once the scene is composed, video rendering allows playout and live update (operation 4).

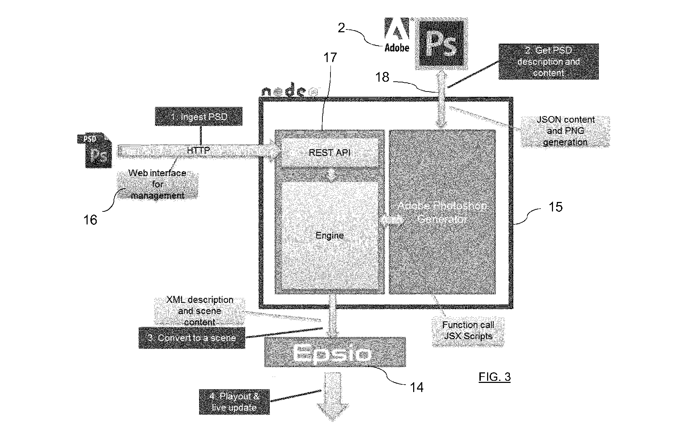

In the sole purpose of illustrating the embodiment, the different operations 1 to 4 above are represented on FIG. 3 in an architecture scheme. Photoshop (PS) native PSD file for example is ingested through a web interface for management 16 (under HTTP or hypertext transfer protocol) at an access point of the new video engine (Operation 1: Ingest PSD). REST API 17 provides requests and responses to/from the remote server. In another embodiment the PSD file is not ingested via the internet network, but from a local server, for example from a Windows program. The engine is coupled via function calls in JavaScript (JSX Scripts) to Adobe Photoshop Generator. Generator retrieves PSD description (PNG generation) and JSON content (for JS Object Notation) from Adobe PS (Operation 2: Get PSD description and content). The engine generates a scene with media (images) by data processing (Operation 3: Convert to a scene). The XML description and scene content (media) are sent to EPSIO (Control app and video engine). The rendering engine of EPSIO generates video playout (Operation 4: Playout & live update). As the rendering engine of the new graphic solution (including EPSIO) is intimately coupled to the plugin Generator, the operator in the control room or broadcasting van is able to modify some graphics almost in real time before playing out or even during playing out.

The above solution presents the following advantages :
- reduce the time gap between creation and playout by eliminating time-consuming production steps while ensuring that the created designs are properly implemented ;
- adopting a "Don't reinvent the wheel" attitude using existing graphics design tools commonly used by graphic agencies ;
- easy integration with current applicant's solutions ;
- opportunity to consider the graphics market with a size-appropriated effort;
- possibility of cloud workflow in case the server part is hosted online.

### Application example 1

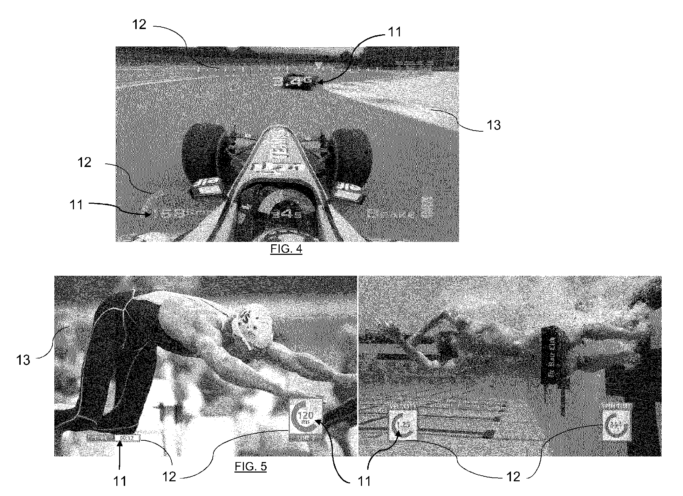

A first example shown on FIG. 4 considers a car racing event filmed by several cameras (including an on-board camera). This event is broadcasted in live. The TV director job is to follow the race and select in live the best camera to show what is happening. Live graphics (like ranking, speed of cars, etc.) can be displayed to bring up information to the TV viewer.

Should a crash occur, thanks to the process previously described, it will be possible in instant replay :
- to select among all the cameras which one is the best to review what happened;
- to select most relevant data 11 that will possibly explain why the crash occurs (speed, accelerations, wheel pressure, etc.)

The TV viewer will actually see a video sequence in slow motion combined with graphics 12 that contain data information 11 to explain what happened exactly.

### Application example 2

A second example shown on FIG. 5 considers a swimming contest filmed by several cameras. This event is broadcasted in live. The TV director job is to follow the race and select in live the best camera to show what is happening. Live graphics (like ranking, speed of swimmer, etc.) can be displayed to bring up information to the TV viewer.

Should one swimmer break a world record, thanks to the process previously described, it will be possible in instant replay to review the race of this swimmer at key moments to explain with some data 11, for example the reaction time at the start (left) or the time taken to do a U-turn at the end of the lane (right), why these performances lead to new world record.

### Application example 3

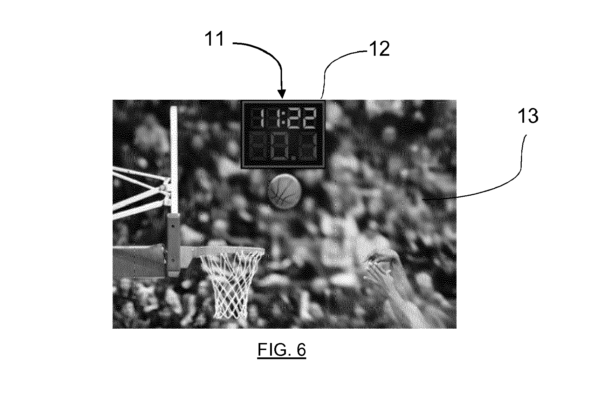

A third example shown on FIG. 6 considers a basket ball game filmed by several cameras This event is broadcasted in live. The TV director job is to follow the game and select in live the best camera to show what is happening. Live graphics (like score, clock, etc.) can be displayed to bring up information to the TV viewer.

Supposing that the countdown before the end of the game is started and the score is the same for both teams. Very close to buzzing time a player is shooting the ball to the basket and scores, causing his team to win the game. The following question may arise : is the shot valid or are we able to say if the shot has been done before hearing the buzzer as requested by the game rules ?

In instant replay, thanks to the process described above, it will be possible to select the best camera angle showing the ball leaving the player hand and to check the clock data graphically created 11, 12 to see if the the shot is valid or not.

Finally the present invention offers still other perspectives :
- automatic binding of data to graphics on a cloud platform ;
- file based workflow instead of video workflow to address a "2^{nd} screen" platform ;
- archiving of data and video together for later usage ;
- be able to generate at the same time different set of data / graphics chart according to specific destinations (multi-languages, profiling, etc.).

### List of reference symbols

- 1.: data provider
- 2.: graphics design tool
- 3.: (multi)cam(s)
- 4.: production server platform
- 5.: ingestion means
- 6.: selection interface
- 7.: end user
- 11.: data feed
- 12.: graphic template
- 13.: video material
- 14.: render engine
- 15.: JavaScript-architectured communication platform
- 16.: web management interface
- 17.: means for communication with a web remote server
- 18.: interface for communicating with a local server
- 24.: video server

## Claims

1. A workflow method in broadcasting applications of an event for delivering a video scene including data dynamically incrusted in the video and displayed graphically, using a production server platform (4) comprising at least a video server (24) and a real-time render engine (14), wherein said workflow method comprises the steps of:
- providing a data feed (11) from a data provider (1) ;
- providing graphic templates (12) of a graphics chart using a graphics design tool (2) ;
- recording video material (13) using at least one camera (3) at a given recording speed ;
- ingesting synchronously into the server platform (4) said video material (13), said data feed (11) and said graphic templates (12) using ingestion means (5);
- binding graphics items to the ingested data feed (11), said graphics items being obtained by dynamically adding or modifying the graphic templates (12) provided by the graphics design tool (2) ;
- selecting an aggregate set of a video sequence from the video material (13) and said graphics items associated with data, using a selection interface (6),
- merging said selected video sequence and graphics items aggregate set into a composite video/graphics scene including data display, using the real-time render engine (14), so that data are displayed in a graphic lining and are time varying along with the video scene in progress and
- playing out the latter towards an end user (7).

2. The workflow method of Claim 1, wherein, in the ingesting step :
- the provided data feed (11) is time stamped for being synchronized with the video material (13) ;
- graphics metadata and text items are dynamically extracted from the graphic design tool (2) and ingested for allowing creating the graphics items.

3. The workflow method of Claim 1, wherein, in the selecting step :
- a video sequence is extracted from the video material (13) ingested in a time range ;
- data are extracted from the data feed (11) ingested in the same time range.

4. The workflow method of Claim 1, wherein the step of binding the graphics items to the ingested data feed (11) is performed prior to the event recording or on user's choice during the selection step.

5. The workflow method of Claim 1, wherein the step of binding the graphics items to the ingested data feed (11) and/or the step of selecting an aggregate set of a video sequence from the video material (13) and said graphics items associated with data are performed remotely through a cloud platform.

6. The workflow method of Claim 1, wherein the playing out of said selected and merged video sequence and graphics items associated with data are performed at a speed different from the recording speed.

7. The workflow method of Claim 6, wherein the playing out of said selected and merged video sequence and graphics items associated with data are performed in a slow motion replay mode.

8. The workflow method of Claim 6, wherein the playing out of said selected and merged video sequence and graphics items associated with data are performed in live playout.

9. The workflow method of Claim 1, wherein the data provider (1) is selected from the group consisting of a statistics provider, a data logger and at least one data sensor.

10. The workflow method of Claim 2, wherein an addition or a modification of a graphic item is performed directly in the graphics design tool (2) so that the graphics chart is dynamically updated within the video scene before or during the playout thereof in real time.

11. The workflow method according to Claim 1, wherein the graphics chart is an image asset file containing one or more layers and/or text items.

12. The workflow method according to Claim 11, wherein said one or more layers and/or text items are selected from the group consisting of sized shape, texture, colour/contrast, fill and typography layers.

13. The workflow method according to Claim 11, wherein the production server platform (4) is interfaced with the graphics design tool (2), the latter being provided with a dynamic image generation plugin.

14. The workflow method according to Claim 13, wherein image asset files are dynamically generated or modified, using the image generation plugin, from the content of said one or more layers and/or texts, after that at least one layer and/or text item has been created or modified.

15. A video server system for creating a workflow in broadcasting applications of an event for delivering a video scene including data dynamically incrusted in the video and displayed graphically, comprising :
- a data provider (1) for providing a data feed (11) ;
- at least one camera (3) for recording video material (13) ;
- a graphics design tool (2) provided with a dynamic image generation plugin for providing graphic templates (12) of a graphics chart and for dynamically adding or modifying said graphics templates (12) into graphics items ;
- a production server platform (4) including a video playout and control render engine (14), interfaced with said data provider (1), said at least a camera (3) and said graphics design tool (2) provided with a dynamic image generation plugin for providing graphic templates (12) of a graphics chart respectively ;
- means (5) for synchronously ingesting recorded video material (3), data feed (11) and graphic templates (12) into the production server platform (4) ;
- a communication platform (15) for the communication of the production server platform (4) including the video playout and control render engine (14) with said graphics design tool (2) provided with a dynamic image generation plugin respectively ;
- a binding interface for binding graphics items to the ingested data feed (11), said graphics items being obtained by dynamically adding or modifying the graphic templates (12) provided by the graphics design tool (2) ;
- a selection interface (6) for selecting an aggregate set of video scene from the video material (13) and said graphics items associated with data ;
so that the production server platform (4) is able to communicate with the dynamic image generation plugin via function calls, while said dynamic image generation plugin is able to retrieve file description and content of a graphics item from the graphics design tool (2) interfaced with the production server platform (4), under the form of structured information script and open image format;
so that the production server platform (4) is able to create a set of image media associated graphically with data and to convert said set of image media to a scene using web mark-up language description and scene content and ;
so that the video playout and control render engine (14) is able to operate playout and live update of the scenes in real time or in quasi real time during the event.
